# EUROPEAN PATENT APPLICATION

(11) **EP 4 822 305 A1**
(43) Date of publication of application: **14.10.2026**
(21) Application number: 26171449.7
(22) Date of filing: 09.04.2026
(51) Int. Cl.: G01F 23/18, F01M 11/12, G01F 23/14, G01F 23/80

(54) **SYSTEMS AND METHODS FOR COLUMN DEPTH PRESSURE BASED ENGINE OIL LEVEL SENSING**

(30) Priority: 09.04.2025 US 202519174722
(71) Applicant: Pratt & Whitney Canada Corp., Longueuil, Québec J4G 1A1 (CA)
(72) Inventor: SMITH, Michael P., (01BE5) Longueuil, J4G 1A1 (CA)
(74) Representative: Dehns

(57) **Abstract**

A method (300) includes obtaining, from a first sensor (211), a first pressure, the first pressure exerted through a volume of oil (207) in an oil tank (205) of an aircraft upon the first sensor (211), the first sensor (211) disposed near a sensor port (209) proximate to a bottom of the oil tank (205). The method includes obtaining, from a second sensor (215), a second pressure, the second pressure comprising an atmospheric pressure of the oil tank (205) or of an environment external to the oil tank (205), determining a pressure differential between the first pressure and the second pressure, and determining an oil level of the oil tank (205) based on the pressure differential and an expected oil density.

## Description

### TECHNICAL FIELD

This invention is generally directed to aircraft sensor technology. More specifically, this invention is directed to systems and methods for column depth pressure-based engine oil level sensing.

### BACKGROUND

Engine oil level is, for practically all types of aircraft engines, an important metric for confirming normal operation and for identifying problem conditions. Running out of oil, or significant drops in engine oil level can cause or threaten engine failure in both reciprocating and turbine engines. Historically, measurement of engine oil levels is performed using electromechanical sensors in which a resistance or switch value is determined by the position of a float that reciprocates upwards and downwards based on the current oil level. Floating atop the surface of the oil in a sump or other reservoir, the float moves up and down along the column in response to the current oil level. The at least partially conductive column and float are constructed such that the float carries a magnet that interacts with a series of magnetic switches inside the column. Switches connect resistors in a circuit such that a measurement of the circuit's resistance is an indication of the approximate level of the fluid.

While such electromechanical float-based systems can provide oil measurements, they suffer from multiple design defects of particular concern for aircraft applications. For example, they require the installation of a relatively long column in the oil sump or oil tank, which places spatial constraints on the design of such tanks. Additionally, float-based sensors necessarily have moving parts, and can depend potentially upon delicate magnetic switches, which can break or get stuck, resulting in aircraft downtime.

Enhancing the robustness and compactness of aircraft oil sensors provides a source of technical challenges and opportunities for improvement in the art.

### SUMMARY

This invention is directed to systems and methods for column depth pressure-based engine oil level sensing.

According to an aspect of the present invention, a method includes obtaining, from a first sensor, a first pressure, the first pressure exerted through a volume of oil in an oil tank of an aircraft upon the first sensor, the first sensor disposed near a sensor port proximate to a bottom of the oil tank. The method can further include obtaining, from a second sensor, a second pressure, the second pressure comprising an atmospheric pressure of the oil tank or of an environment external to the oil tank, determining a pressure differential between the first pressure and the second pressure and determining an oil level of the oil tank based on the pressure differential and an expected oil density.

According to another aspect of the present invention, an apparatus includes an input/output port connected to a first sensor and a second sensor and at least one processor. The at least one processor can be configured to obtain, from the first sensor, a first pressure, the first pressure exerted through a volume of oil in an oil tank of an aircraft upon the first sensor, the first sensor disposed near a sensor port proximate to a bottom of the oil tank. The at least one sensor can be further configured to obtain, from the second sensor, a second pressure, the second pressure comprising an atmospheric pressure of the oil tank or of an environment external to the oil tank, determine a pressure differential between the first pressure and the second pressure and determine an oil level of the oil tank based on the pressure differential and an expected oil density.

According to another aspect of the present invention, a non-transitory, computer-readable medium contains instructions, which when executed by a processor, cause an apparatus to obtain, from a first sensor, a first pressure, the first pressure exerted through a volume of oil in an oil tank of an aircraft upon the first sensor, the first sensor disposed near a sensor port proximate to a bottom of the oil tank. The instructions, when executed by the processor, can further cause the apparatus to obtain, from a second sensor, a second pressure, the second pressure comprising an atmospheric pressure of the oil tank or of an environment external to the oil tank, determine a pressure differential between the first pressure and the second pressure and determine an oil level of the oil tank based on the pressure differential and an expected oil density.

The following optional features may be applied to any of the above aspects.

The current temperature at the oil tank can be obtained and the expected oil density can be determined based on a baseline oil density, adjusted for thermal expansion at the current temperature.

The second sensor can be disposed within the oil tank.

The second sensor can be disposed outside of the oil tank.

At least one of the first sensor or the second sensor comprises a micro electronic mechanical system (MEMS) sensor with no moving parts.

The processor can select one of a flight mode or a ground mode for determining the oil level of the oil tank, responsive to selecting the ground mode, the oil level of the oil tank can be determined based on a current value of the pressure differential and the expected oil density and responsive to selecting the flight mode, the oil level of the oil tank can be determined based on an average value of the pressure differential and the expected oil density over a measurement time window.

Sensor data of the aircraft can be obtained and based on the sensor data, the processor can perform one or more of: adjusting a length of the measurement time window, or pausing the measurement time window.

Other technical features may be readily apparent to one skilled in the art from the following figures, descriptions, and.

### BRIEF DESCRIPTION OF THE DRAWINGS

For a more complete understanding of this invention, reference is now made to the following description, taken in conjunction with the accompanying drawings, in which:
Figure 1 illustrates an example device for implementing methods for determining an oil level based on a pressure differential according to embodiments of this invention;
Figure 2 illustrates aspects of an oil tank and sensor configuration for determining an oil level based on a pressure differential according to embodiments of this invention; and
Figure 3 illustrates operations of an example method for determining oil levels based on a pressure differential according to this invention.

### DETAILED DESCRIPTION

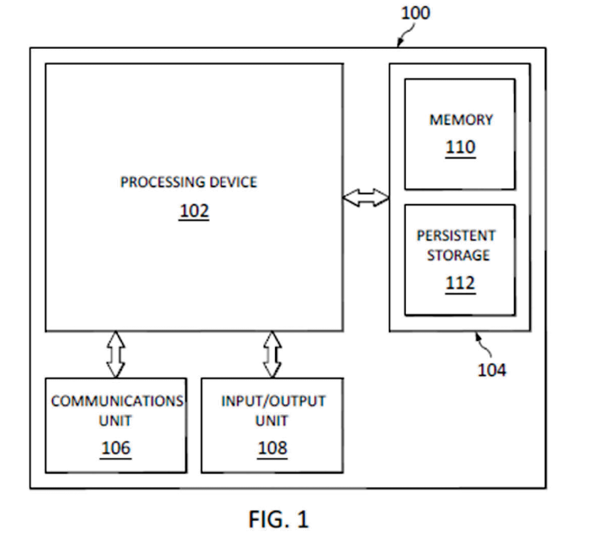

Figures 1 through 3, described below, and the various embodiments used to describe the principles of the present invention are by way of illustration only and should not be construed in any way to limit the scope of this invention. Those skilled in the art will understand that the principles of the present invention may be implemented in any type of suitably arranged device or system.

As described above, reducing the overall size of on-board oil sensors and eliminating potentially fragile moving parts from such sensors remains a source of technical challenges and for opportunity in the art.

Embodiments according to the present invention provide systems and methods for column depth pressure-based engine oil level sensing, which address the challenges of providing more compact oil level sensing, and eliminate potential points of mechanical failure in electromechanical float-based systems.

Figure 1 illustrates an example device 100 for interrogating an apparatus for column depth pressure-based engine oil level sensing according to various embodiments of this invention. Device 100 can be, for example, part of a fully autonomous digital engine control ("FADEC"), an electronic engine control ("EEC"), or an Aircraft Engine Monitor System / Cockpit Display system.

As shown in Figure 1, the device 100 denotes a computing device or system that includes at least one processing device 102, at least one storage device 104, at least one communications unit 406, and at least one input/output (I/O) unit 108. The processing device 102 may execute instructions that can be loaded into a memory 110. The processing device 102 includes any suitable number(s) and type(s) of processors or other devices in any suitable arrangement. Example types of processing devices 102 include one or more microprocessors, microcontrollers, digital signal processors (DSPs), application-specific integrated circuits (ASICs), field programmable gate arrays (FPGAs), graphics processing units (GPUs), NPUs, or discrete circuitry.

The memory 110 and a persistent storage 112 are examples of storage devices 104, which represent any structure(s) capable of storing and facilitating retrieval of information (such as data, program code, and/or other suitable information on a temporary or permanent basis). The memory 110 may represent a random-access memory or any other suitable volatile or non-volatile storage device(s). The persistent storage 112 may contain one or more components or devices supporting longer-term storage of data, such as a read only memory, hard drive, Flash memory, or optical disc.

The communications unit 106 supports communications with other systems or devices. For example, the communications unit 106 can include a network interface card or a wireless transceiver facilitating communications over a wired or wireless network. The communications unit 106 may support communications through any suitable physical or wireless communication link(s).

The I/O unit 108 allows for input and output of data. For example, the I/O unit 108 may provide a connection for user input through a keyboard, mouse, keypad, touchscreen, or other suitable input device. The I/O unit 108 may also send output to a display or other suitable output device. Note, however, that the I/O unit 108 may be omitted if the device 100 does not require local I/O, such as when the device 100 can be accessed remotely or operated autonomously. In embodiments according to the present invention, one or more ports of the I/O unit 108 can be connected to one or more pressure sensors which measure a pressure differential across the pooled oil in a reservoir on the aircraft.

Although Figure 1 illustrates one example of a device 100 for interrogating two or more sensors to obtain oil tank level values, various changes may be made to Figure 1. For example, computing devices and systems come in a wide variety of configurations, and Figure 1 does not limit this invention to any particular computing device or system.

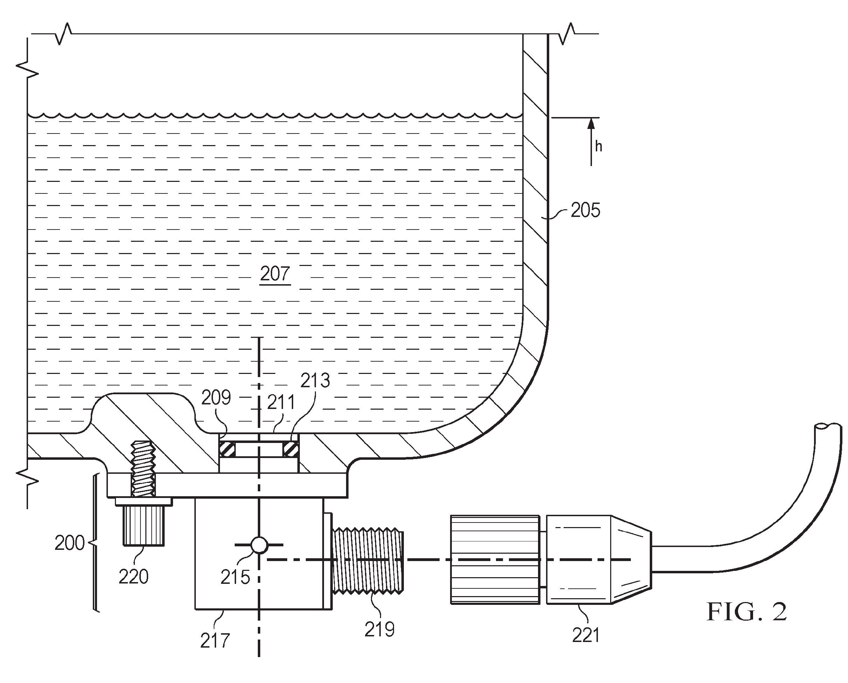

Figure 2 illustrates an example of a system 200 implementing column depth pressure based oil level sensing according to this invention.

Referring to the explanatory example of FIG. 2, system 200 is disposed at, or near the bottom of an oil tank 205. Oil tank 205 can be a hot oil tank, a cold oil tank, or other reservoir for oil in an aircraft (including both fixed-wing and rotary aircraft). Depending on the geometry of the oil tank relative to system 200, the components of system 200 can be disposed primarily inside of, or outside of oil tank 205. Put differently, installation configurations beyond the one shown in FIG. 2 are possible and within the contemplated scope of this invention.

Oil tank 205 contains a volume of oil 207 (for example, oil for lubricating the pistons and bushings within the crankcase of a reciprocating engine, or oil for lubricating the main and secondary spool of a turbine engine), which, when the engine is not running, sits at height *h* shown in the figure, wherein *h* is a trusted proxy (because oil tank 205 does not change in volume) for the amount of oil in system 200. During flight, the average value of h over a measurement interval, while not as accurate as the static height, can be workable proxy for an approximate oil level within system 200.

Oil tank 205 contains one or more sensor ports 209, in which a first sensor 211 is disposed, typically on one side of a seal 213 blocking the passage of oil through sensor port 209. In some embodiments, the one more sensor ports 209 can include a pre-existing port for a float-type electromechanical sensor. First sensor 211 comprises an electromechanical pressure sensor (for example, a micro electromechanical sensor or "MEMS"), which outputs a signal proportional to the pressure exerted upon first sensor 211 through oil 207. As skilled artisans will appreciate, the total pressure exerted upon first sensor 211 through oil 207 is the sum of the atmospheric pressure exerted upon oil 207 by the ambient air, and the depth-based weight of the column of oil 207 bearing down upon first sensor 211. In some embodiments, first sensor 211 can be a micro-electrical mechanical pressure sensor ("MEMS"), such as a piezoelectric sensor. Additionally, first sensor 211 may be part of a sensor package which also includes a temperature sensor configured to measure the present temperature of oil 207.

Accordingly, to obtain the current height h of the oil level in tank 205 as a function of the pressure measured at first sensor 211, the component of the measured pressure due to atmospheric pressure upon the oil needs to be subtracted out. Consequently, system 200 further includes a second sensor 215, which comprises an atmospheric pressure sensor. According to certain embodiments, second sensor 215 can also be a MEMS pressure sensor. Examples of suitable MEMS pressure sensors include, without limitation the Bosch BMP380 sensor, and trench etched resonant pressure sensors (TERPS), such as the RPS/DPS8000 line of sensors from Baker Hughes/Druck. Second sensor 215 can, in some embodiments, be disposed inside oil tank 205, to account for temporary variations between the external atmospheric pressure and the local pressure inside oil tank 205. In some embodiments, second sensor can be disposed outside of oil tank 205 (as shown in the figure) to reduce the overall size of system 200. Further, in some embodiments, system 200 can comprise multiple atmospheric pressure sensors, including one or more sensors disposed within oil tank 205 and one or more sensors outside of oil tank 205.

As shown in FIG. 2, in some embodiments, first sensor 211, seal 213 and second sensor 215 are provided in a housing 217. According to some embodiments, housing 217 is proportioned to fit in some portion of the space of an existing float-based oil sensor, and can, in some embodiments, also utilize the same mounting hardware 220 and existing anchor points on oil tank 205.

According to some embodiments, housing 217 further comprises one or more electrical connectors 219. One or more electrical connectors 219 are connected, either directly or indirectly (for example, through an amplifier or buffer) to both of first sensor 211 and second sensor 215. In various embodiments, a wiring harness 221 connects to a FADEC, EEC or other processing device (for example, device 100 in FIG. 100), which receives, at a minimum, atmospheric pressure data from second sensor 215, measured pressure from first sensor 211, and depending on embodiments, oil and air temperature data from one or more of first sensor 211 and second sensor 215. In some embodiments, instead of using two sensors, the measurements can be determined using one sensor and analogue electronics, or using a foreseeable sensor that measures differential pressure.

At a minimum, the FADEC, EEC or other processing platform performs an initial determination of the oil level in tank 205 by subtracting the measured atmospheric pressure value obtained from second sensor 215 from the measured pressure at first sensor 211 to obtain a value of the pressure exerted upon first sensor 211 from the weight of the column of oil. The oil-only pressure value is then divided by a coefficient accounting for the density of the oil. In some embodiments, the coefficient for the oil density can be a known baseline value (for example, the density of oil at a temperature within a range of expected temperatures). In some embodiments, the coefficient for the density of the oil can be adjusted to account for thermal expansion based on temperature data obtained from first sensor 211 or second sensor 215.

In some embodiments, the processing platform determining current values of the level (i.e., height h) of oil 207 in tank 205, based on the outputs from first sensor 211 and second sensor 215 can operate in one or more modes, depending on the operating state of the aircraft. For example, in response to one or more criteria (for example, activation of a landing gear's ground switch, or an engine speed below a threshold value), the processing platform may determine oil pressure level according to a first or ground mode. In one embodiment, in ground mode, the determined oil level can be based on the instantaneous value of the difference between the pressure measured at first sensor 211 and the air pressure measured at second sensor 215. Further, in some embodiments, the FADEC or other processing platform may prioritize atmospheric pressure obtained by a sensor outside of the oil tank 205. In some embodiments, this processing could all be done in the sensor, such that the sensor delivers a digital value of computed column height based on a pre-programmed value for density.

In some embodiments, the processing platform determining the current oil level values can operate in a second, flight mode, in response to satisfaction of one or more criteria (for example, engine speed, sensor/accelerometer data) indicating that the engine is running and the aircraft of which it is a part is, or is about to, be in flight. According to some embodiments, in the second mode, the processing platform can determine an estimated oil level value based on an average differential over a measurement window. The length of the measurement window can, in some embodiments, be tuned or paused in response to accelerometer data indicating that the aircraft is in highly dynamic state, or operating under one or more conditions (for example, inverted flight or performing high-G maneuvers) from which the oil level cannot be accurately inferred by from a measured pressure differential. Additionally or alternatively, accelerometer data can be used to determine one or more adjustment values of the measured differential to account for inclination of oil tank 205.

While FIG. 2 has been described with reference to embodiments in which system 200 provides sensor data, via wiring harness 221, to an external processing platform, embodiments according to this invention are not so limited. In some embodiments, the processing capacity to determine oil level depth as a function of a pressure differential, and correct same for temperature, contextual or motion effects can reside in system 200. System 200 can include its own processor or controller for determining a current oil level value and can transmit the so-determined oil level value to the FADEC, EEC or another device embodying the architecture of device 100.

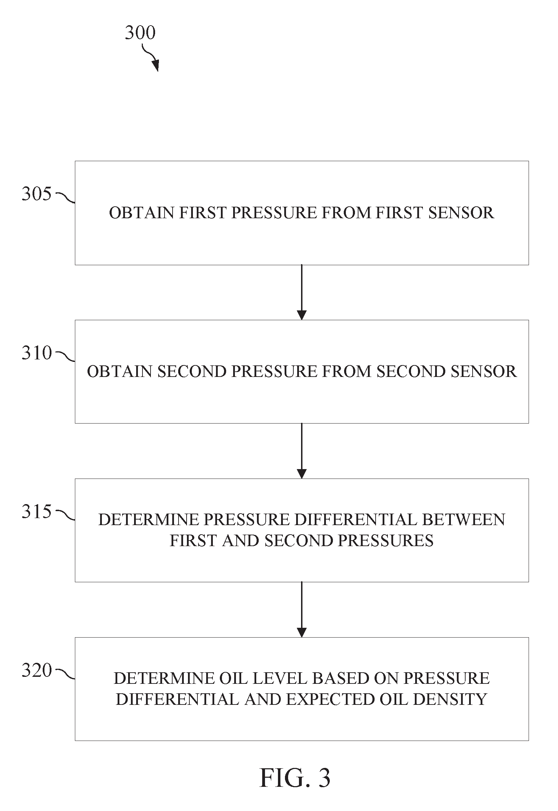

Figure 3 illustrates operations of an example method 300 for determining an oil level in an aircraft's oil tank according to embodiments of this invention. The operations described with reference can be performed using system 200 in FIG. 2, wherein system 200 includes, or is connected to a FADEC, EEC or other processing platform (for example, device 100 in FIG. 1).

Referring to the illustrative example of FIG. 3, at operation 305, a processor contained in a sensing system (for example, system 200 in FIG. 2) or communicatively connected to a sensing system, obtains, from a first sensor, a first pressure. The first pressure can be a pressure exerted through a volume of oil in an oil tank (for example, oil tank 205) upon the sensor by both the weight of the oil, and the action of the ambient atmospheric pressure upon the oil. As noted herein, in some embodiments, the first sensor can also record other data, such as the current temperature of the oil, which can be a useful metric for tuning a value of the expected density of the oil for calculating a current oil level.

At operation 310, the processor obtains, from a second sensor, a second pressure, wherein the second pressure is a measured air pressure at the oil tank. Depending on embodiments, the second pressure can be measured inside the oil tank, outside the oil tank, or at both locations.

At operation 315, the processor determines a pressure differential between the first pressure and the second pressure, wherein the pressure differential reflects the component of the first pressure attributable to the weight of the oil upon the first sensor.

At operation 320, the processor determines an oil level of the tank based on the pressure differential and an expected oil density. In some embodiments, a single default value of the oil density is used at operation 320. In some embodiments, the expected oil density comprises a baseline oil density value (for example, the density at a reference temperature) adjusted for thermal expansion or contraction effects away from the reference temperature.

In various embodiments, determining the oil level of the tank can be performed differently based on running conditions of the engine. For example, if it is determined that the engine is not running, the system can use an external sensor, e.g., the second sensor, to measure environmental pressure outside the tank. Because pressure above the oil tends to be the same as the pressure outside the tank when the engine is not running, the oil level can be determined by calculating an internal pressure of the tank based on the measured external value and the running conditions of the engine. As another example, when the engine is running, the pressure in the oil tank tends to not be the same as the ambient environment pressure. This, if it is determined the engine is running, a pressure in the oil tank can be measured, e.g., via the first sensor, and a pressure at the bottom of the tank can be measured, e.g., via the second sensor, to determine the oil level in the tank using these direct internal measurements. Therefore, in some embodiments, the second pressure measured by the second sensor can be a pressure in the oil tank or can be a pressure of the environment outside the oil tank.

In some embodiments, various functions described in this patent document are implemented or supported by a computer program that is formed from computer readable program code and that is embodied in a computer readable medium. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive (HDD), a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable storage device.

It may be advantageous to set forth definitions of certain words and phrases used throughout this patent document. The terms "application" and "program" refer to one or more computer programs, software components, sets of instructions, procedures, functions, objects, classes, instances, related data, or a portion thereof adapted for implementation in a suitable computer code (including source code, object code, or executable code). The term "communicate," as well as derivatives thereof, encompasses both direct and indirect communication. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present invention should not be read as implying that any particular element, step, or function is an essential or critical element that must be included in the claim scope.

While this invention has described certain embodiments and generally associated methods, alterations and permutations of these embodiments and methods will be apparent to those skilled in the art. Accordingly, the above description of example embodiments does not define or constrain this invention. Other changes, substitutions, and alterations are also possible without departing from the spirit and scope of this invention, as defined by the following claims.

## Claims

1. A method (300), comprising:
obtaining, from a first sensor (211), a first pressure, the first pressure exerted through a volume of oil (207) in an oil tank (205) of an aircraft upon the first sensor (211), the first sensor (211) disposed near a sensor port (209) proximate to a bottom of the oil tank (205);
obtaining, from a second sensor (215), a second pressure, the second pressure comprising an atmospheric pressure of the oil tank (205) or of an environment external to the oil tank (205);
determining a pressure differential between the first pressure and the second pressure; and
determining an oil level (h) of the oil tank (205) based on the pressure differential and an expected oil density.

2. The method (300) of claim 1, further comprising:
obtaining a current temperature at the oil tank (205); and
determining the expected oil density based on a baseline oil density, adjusted for thermal expansion at the current temperature.

3. The method (300) of claim 1 or 2, wherein the second sensor (215) is disposed within the oil tank (205).

4. The method (300) of claim 1 or 2, wherein the second sensor (215) is disposed outside of the oil tank (205).

5. The method (300) of any preceding claim, wherein at least one of the first sensor (211) or the second sensor (215) comprises a micro electronic mechanical system (MEMS) sensor with no moving parts.

6. The method (300) of any preceding claim, further comprising:
selecting one of a flight mode or a ground mode for determining the oil level (h) of the oil tank (205);
responsive to selecting the ground mode, determining the oil level (h) of the oil tank (205) based on a current value of the pressure differential and the expected oil density; and
responsive to selecting the flight mode, determining the oil level (h) of the oil tank (205) based on an average value of the pressure differential and the expected oil density over a measurement time window.

7. The method (300) of claim 6, further comprising:
obtaining sensor data of the aircraft; and
based on the sensor data, performing one or more of: adjusting a length of the measurement time window, or pausing the measurement time window.

8. An apparatus (100), comprising:
an input/output port (108) connected to a first sensor (211) and a second sensor (215); and
at least one processor (102) configured to carry out the method (300) of any preceding claim.

9. A non-transitory, computer-readable medium (110) containing instructions, which when executed by a processor (102), cause an apparatus (100) to carry out the method (300) of any of claims 1 to 7.
